# EUROPEAN PATENT APPLICATION

(11) **EP 4 765 232 A1**
(43) Date of publication of application: **24.06.2026**
(21) Application number: 25211019.2
(22) Date of filing: 24.10.2025
(51) Int. Cl.: H01M 4/134, H01M 4/36, H01M 4/38, H01M 10/0562, H01M 10/0585

(54) **SOLID-STATE BATTERY AND METHOD OF MANUFACTURING SOLID-STATE BATTERY**

(30) Priority: 19.12.2024 JP 2024224581
(71) Applicant: TOYOTA JIDOSHA KABUSHIKI KAISHA, Toyota-shi, Aichi-ken 471-8571 (JP)
(72) Inventor: KIMURA, Takuya, Toyota-shi, Aichi-ken, 471-8571 (JP); WASEDA, Tetsuya, Toyota-shi, Aichi-ken, 471-857 (JP); KAKISHITA, Kenichi, Toyota-shi, Aichi-ken, 471-857 (JP); SATO, Yuki, Toyota-shi, Aichi-ken, 471-8571 (JP); TOKIOKA, Hideyuki, Toyota-shi, Aichi-ken, 471-8571 (JP); MATSUYAMA, Takuya, Toyota-shi, Aichi-ken, 471-8571 (JP)
(74) Representative: Winter, Brandl - Partnerschaft mbB

(57) **Abstract**

A solid-state battery, including a negative electrode layer and a solid electrolyte layer that is adjacent to the negative electrode layer, the negative electrode layer containing a negative electrode active material and a solid electrolyte, and the negative electrode active material containing complexes that include plural particles, and particles that are not included in the complexes, wherein at least some of the particles that are not included in the complexes penetrate into the solid electrolyte layer.

## Description

### BACKGROUND

### Technical Field

The present disclosure relates to a solid-state battery and a method of manufacturing a solid-state battery.

### Related Art

The practical application of secondary batteries using a solid electrolyte (hereinafter also called solid-state batteries) as a secondary battery that can be repeatedly used by being charged has been studied. There are cases in which an electrode of a solid-state battery contains, together with an active material, a solid electrolyte in order to promote movement of ions between particles of the active material within the electrode.

It is known that volume changes at times of charging a battery (times when ions are adsorbed) and at times of discharging a battery (times when ions are released) are great in negative electrode active materials that are contained in negative electrodes of secondary batteries. Further, it has been pointed out that, when volume expansion/contraction of a negative electrode active material is repeated accompanying the charging/discharging of a battery, the joined state of the particles of the active material and the solid electrolyte within the negative electrode may change and cause deterioration of the battery.

Covering the surface of a negative electrode active material with a sulfide solid electrolyte has been proposed as a countermeasure that suppresses changes in volume of a negative electrode active material that accompany charging/discharging of a battery (see, for example, Japanese Patent Application Laid-Open (JP-A) No. 2021-128857).

### SUMMARY

A solid-state battery has a layer (hereinafter also called solid electrolyte layer) that contains a solid electrolyte and is disposed between the positive electrode and the negative electrode. The solid electrolyte layer has the role of a separator that separates the positive electrode and the negative electrode, and has the role of a path by which ions move between the positive electrode and the negative electrode.

Changes in the joined state of the negative electrode and the solid electrolyte layer have been pointed out as a cause of an increase in resistance that accompanies charging/discharging of a solid-state battery.

In view of the above-described circumstances, the present disclosure aims to provide a solid-state battery and a method of manufacturing a solid-state battery in which the joined state of a negative electrode and a solid electrolyte layer can be maintained in a favorable manner.

The present disclosure includes the following aspects.
<1> A solid-state battery, including a negative electrode layer and a solid electrolyte layer that is adjacent to the negative electrode layer,
   the negative electrode layer containing a negative electrode active material and a solid electrolyte, and
   the negative electrode active material containing complexes that include plural particles, and particles that are not included in the complexes, wherein at least some of the particles that are not included in the complexes penetrate into the solid electrolyte layer.
<2> The solid-state battery according to <1>, wherein the negative electrode active material contains element Si.
<3> The solid-state battery according to <1> or <2>, including a structure in which a positive electrode layer, a solid electrolyte layer, a negative electrode layer and a negative electrode collector are disposed in that order at both sides of a positive electrode collector, respectively.
<4> A method of manufacturing the solid-state battery according to any one of <1> to <3>, the method including forming, on a solid electrolyte layer, a negative electrode layer containing a solid electrolyte and a negative electrode active material that is in a state of complexes containing plural particles,
   wherein the forming of the negative electrode layer includes application of pressure to the negative electrode layer such that at least some of the particles contained in the complexes separate from the complexes.
<5> The method according to <4>, comprising:
   forming positive electrode layers on both sides of a positive electrode collector;
   forming solid electrolyte layers on the positive electrode layers; and
   forming negative electrode layers on the solid electrolyte layers.

According to the present disclosure, there are provided a solid-state battery and a method of manufacturing a solid-state battery in which the joined state of a negative electrode and a solid electrolyte layer can be maintained in a favorable manner.

### BRIEF DESCRIPTION OF THE DRAWINGS

Fig. 1 is a cross-sectional view schematically illustrating an example of the structure of a negative electrode structure included in a solid-state battery; and
Fig. 2 is a cross-sectional view schematically illustrating an example of a positive-electrode-centered layered structure included in the solid-state battery.

### DETAILED DESCRIPTION

Embodiments as an example of the present disclosure are described hereinafter. The description thereof and the Examples are directed to exemplify the embodiments, and do not limit the scope of the present disclosure.

In the present disclosure, any numerical range described using the expression "from * to" represents a range in which numerical values described before and after the "to" are included in the range as a minimum value and a maximum value, respectively.

In numerical value ranges that are expressed in a stepwise manner in the present disclosure, the maximum value or the minimum value listed in a given numerical value range may be substituted by the maximum value or the minimum value of another numerical value range that is expressed in a stepwise manner. Further, in the numerical value ranges set forth in the present disclosure, the maximum value or the minimum value of a given numerical value range may be substituted by a value set forth in the Examples.

In the present disclosure, in a case in which there are plural materials that correspond to a component within a composition, the amount of that component within the composition means the total amount of the plural materials existing within the composition, unless otherwise specified.

In the present disclosure, combinations of two or more preferable aspects are more preferable aspects.

In the present disclosure, the term "step" includes not only an independent step which is distinguishable from another step, but also a step which is not clearly distinguishable from another step, as long as the purpose of the step is achieved.

In the present disclosure, the term "solid-state battery" means a secondary battery that at least uses, as an electrolyte, a solid electrolyte. Accordingly, batteries that are called different names such as all-solid-state batteries and semi-solid-state batteries are regarded as the solid-state battery of the present disclosure.

### <Solid-State Battery>

An embodiment of the present disclosure is a solid-state battery including a negative electrode layer and a solid electrolyte layer adjacent to the negative electrode layer, the negative electrode layer containing a negative electrode active material and a solid electrolyte, and the negative electrode active material containing complexes that include plural particles, and particles that are not included in the complexes, wherein at least some of the particles that are not included in the complexes penetrate into the solid electrolyte layer.

In the present disclosure, a negative electrode layer means a layer that contains at least a negative electrode active material, and a solid electrolyte layer means a layer that contains at least a solid electrolyte.

In the following description, a structure formed from a negative electrode layer and a solid electrolyte layer that is adjacent to the negative electrode layer may be called a "negative electrode structure".

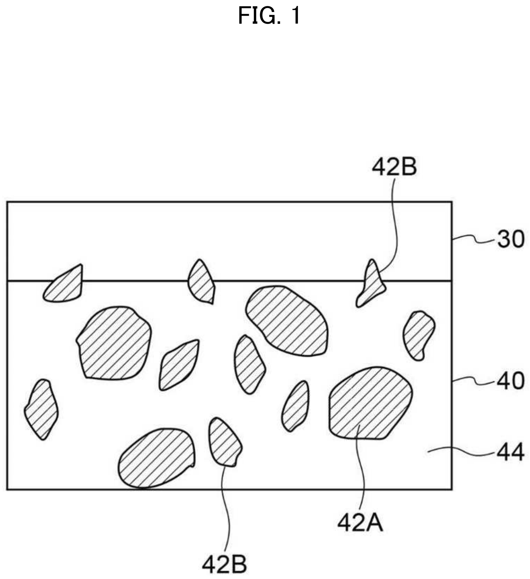

Fig. 1 is a cross-sectional view schematically illustrating an example of the configuration of the negative electrode structure included in the solid-state battery of the present disclosure.

As illustrated in Fig. 1, the negative electrode structure of the solid-state battery of the present disclosure includes a negative electrode layer 40, and a solid electrolyte layer 30 that is adjacent to the negative electrode layer 40.

The negative electrode layer 40 contains particles 42 of a negative electrode active material, and a solid electrolyte 44. The particles 42 of the negative electrode active material include complexes 42A that include plural particles, and particles 42B that are not included in the complexes. At least some of the particles 42B that are not included in the complexes penetrate into the solid electrolyte layer 30.

The negative electrode layer of a solid-state battery is generally subjected to a pressing treatment at a high pressure in order to increase the density of the negative electrode layer and to increase the joined strength of the negative electrode layer and the layers adjacent thereto (i.e., a solid electrolyte layer and a negative electrode collector).

As a result of studies by the present inventors, it was learned that, if a pressing treatment is carried out on a negative electrode layer that contains negative electrode active material particles that are in a state of complexes formed from plural particles, the joined strength of the negative electrode layer with the solid electrolyte layer improves more significantly as compared with a case in which a pressing treatment is carried out on a negative electrode layer in which negative electrode active material particles do not form complexes.

In order to investigate the cause thereof, the interface between a negative electrode layer and a solid electrolyte layer, after performing a pressing treatment on the negative electrode layer in which negative electrode active material particles were in a state of complexes, was observed. As a result, a state was observed in which some of the particles that had separated from the complexes had penetrated into the solid electrolyte layer.

On the other hand, negative electrode active material particles that had penetrated into a solid electrolyte layer were not observed at the interface between a negative electrode layer and a solid electrolyte layer, after performing a pressing treatment on the negative electrode layer in which negative electrode active material particles were not in a state of complexes.

In view of the foregoing, it is surmised that the improvement in the joining strength of the negative electrode layer to the solid electrolyte layer is due to the negative electrode active material particles that penetrate into the solid electrolyte layer.

The reason why particles, which have separated from complexes, penetrate into a solid electrolyte layer when a pressing treatment is carried out on a negative electrode layer containing negative electrode active material particles that are in a state of complexes, is thought to be as follows, for example.

In a negative electrode layer that has not been subjected to a pressing treatment, the solid electrolyte is present around the negative electrode active material particles. Therefore, when a pressing treatment is carried out, the solid electrolyte that is present around the negative electrode active material particles is caused to deform and cover the surfaces of the negative electrode active material particles. As a result, it is thought that penetration of the negative electrode active material particles into the solid electrolyte layer is suppressed.

On the other hand, if the negative electrode active material, which is contained in the negative electrode layer that has not been subjected to a pressing treatment, is in a state of complexes, the complexes are destroyed by the pressing treatment, and some of the particles separate from the complexes. The peripheries of particles immediately after separating from the complexes destroyed by the pressing treatment are not covered by the solid electrolyte. Therefore, it is thought that the particles that have separated from the complexes and are located in a vicinity of the interface with the solid electrolyte layer are likely to penetrate into the solid electrolyte layer.

In the present disclosure, the pressing treatment carried out on the negative electrode layer may be a process for transferring the negative electrode layer onto a solid electrolyte layer, or may be a process that is carried out on the negative electrode layer that has been formed on a solid electrolyte layer.

In the present disclosure, an example of the complex that contains plural particles is a complex that contains plural (e.g., two to ten) particles (i.e., primary particles). The complex may further contain a binder for binding the primary particles.

The method of producing the negative electrode active material that is in a state of complexes is not particularly limited, and can be executed by a known method. For example, the negative electrode active material that is in a state of complexes may be produced by a method including: preparing a composition that contains primary particles for forming the complexes, and a binder and a solvent; forming droplets of the composition; and removing the solvent from the droplets.

The complexes that contain plural particles include voids inside the complexes. The voids that are included inside the complexes exhibit the effect of mitigating volume changes of the negative electrode active material.

The particle diameters of the complexes and the primary particles of the negative electrode active material that are contained in the negative electrode layer are not particularly limited. For example, the particle diameter of the complexes can be selected from the range of from 5 µm to 50 µm, and the particle diameter of the primary particles can be selected from the range of from 0.5 µm to 5 µm.

The material of the negative electrode active material contained in the negative electrode layer is not particularly limited, and, for example, can be selected from the materials for the negative electrode active material that are described hereinafter.

From the standpoint of forming a state in which particles that are not contained in the complexes penetrate into the solid electrolyte layer, it is preferable that the negative electrode active material be an active material that contains element Si.

From the standpoint of forming a state in which particles that are not contained in the complexes penetrate into the solid electrolyte layer, it is preferable that the solid electrolyte layer contain a sulfide solid electrolyte.

The solid-state battery of the present disclosure may include plural negative electrode structures. The number of the negative electrode structures included in the solid-state battery of the present disclosure is not particularly limited, and can be selected from the range of from 2 to 100, for example.

In a case in which the solid-state battery of the present disclosure includes plural negative electrode structures, all of the negative electrode structures may satisfy the above-described condition (i.e., at least some of the particles that are not contained in the complexes in the negative electrode layer penetrate into the solid electrolyte layer), or only some of the negative electrode structures may satisfy the above-described condition.

From the standpoint of maintaining the joined state of the negative electrode layer and the solid electrolyte layer in a favorable manner, among all of the negative electrode structures contained in the solid-state battery of the present disclosure, 50% or more in number of the negative electrode structures preferably satisfy the above-described condition, more preferably 70% or more in number of the negative electrode structures satisfy the above-described condition, and further preferably 80% or more in number of the negative electrode structures satisfy the above-described condition.

### (Structural Example of Solid-State Battery)

The solid-state battery of the present disclosure may include a structure (hereinafter also called positive-electrode-centered layered structure) in which a positive electrode layer, a solid electrolyte layer, a negative electrode layer and a negative electrode collector are disposed in that order at both sides of a positive electrode collector, respectively.

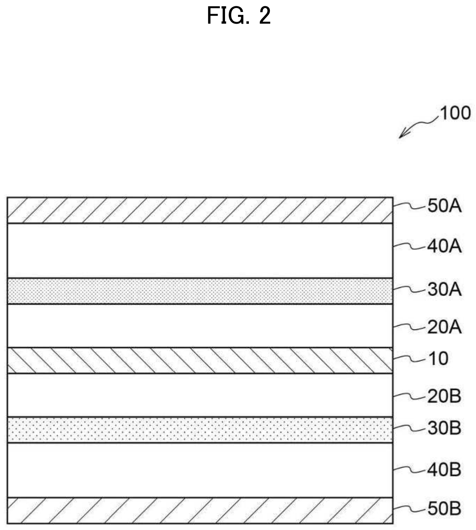

An example of the positive-electrode-centered layered structure included in the solid-state battery of the present disclosure is illustrated in Fig. 2.

As illustrated in Fig. 2, a positive-electrode-centered layered structure 100 is in a state in which a first negative electrode collector 50A, a first negative electrode layer 40A, a first solid electrolyte layer 30A, a first positive electrode layer 20A, a positive electrode collector 10, a second positive electrode layer 20B, a second solid electrolyte layer 30B, a second negative electrode layer 40B and a second negative electrode collector layer 50B are disposed in that order.

A solid-state battery that has a positive-electrode-centered layered structure can be manufactured by, for example, a method including the steps described hereinafter.

In the following explanation, there are cases in which the first negative electrode layer and the second negative electrode layer are called the "negative electrode layers" without discriminating therebetween, there are cases in which the first negative electrode collector and the second negative electrode collector are called the "negative electrode collectors" without discriminating therebetween, there are cases in which the first positive electrode layer and the second positive electrode layer are called the "positive electrode layers" without discriminating therebetween, there are cases in which the first positive electrode collector and the second positive electrode collector are called the "positive electrode collectors" without discriminating therebetween, and there are cases in which the first solid electrolyte layer and the second solid electrolyte layer are called the "solid electrolyte layers" without discriminating therebetween.

### (Step 1)

In step 1, positive electrode layers are formed on both surfaces of a positive electrode collector, and laminated body 1 (layer structure: first positive electrode layer / positive electrode collector / second positive electrode layer) is obtained. The method of forming the positive electrode layers on both surfaces of the positive electrode collector is not particularly limited, and can be selected from a coating method, a transferring method and the like. As needed, laminated body 1 may be subjected to a pressing treatment.

As needed, end portion fillers may be disposed at the end portions of the positive electrode layers formed on both surfaces of the positive electrode collector. The end portion fillers have functions such as arranging the shapes of the end portions of the positive electrode layers, and preventing the positive electrode layers from contacting the negative electrode layers that are in an expanded state at the time of charging. The material of the end portion fillers can be selected from materials that are electrically insulative, such as resins.

### (Step 2)

In step 2, solid electrolyte layers are formed on the positive electrode layers that are formed on both surfaces of the positive electrode collector, and laminated body 2 (layer structure: first solid electrolyte layer / first positive electrode layer / positive electrode collector / second positive electrode layer / second solid electrolyte layer) is obtained. The method of forming the solid electrolyte layers on the positive electrode layers is not particularly limited, and can be selected from a coating method, a transferring method and the like. From the standpoint of workability, a transferring method in which formation of the solid electrolyte layers and a pressing treatment can be carried out collectively is preferable.

### (Step 3)

In step 3, negative electrode layers are formed on the solid electrolyte layers that are formed on the positive electrode layers, and laminated body 3 (layer structure: first negative electrode layer / first solid electrolyte layer / first positive electrode layer / positive electrode collector / second positive electrode layer / second solid electrolyte layer / second negative electrode layer) is obtained. The method of forming the negative electrode layers on the solid electrolyte layers is not particularly limited, and can be selected from a coating method, a transferring method and the like. From the standpoint of workability, a transferring method in which formation of the negative electrode layers and a pressing treatment can be carried out collectively is preferable.

### (Step 4)

In step 4, negative electrode collectors are disposed on the negative electrode layers that are formed on the solid electrolyte layers, and laminated body 4 (layer structure: first negative electrode collector / first negative electrode layer / first solid electrolyte layer / first positive electrode layer / positive electrode collector / second positive electrode layer / second solid electrolyte layer / second negative electrode layer / second negative electrode collector) is obtained. Laminated body 4 may be subjected to a pressing treatment as needed.

It is possible to omit step 4 when the negative electrode layers, which are formed on the solid electrolyte layers in step 3, are joined to the negative electrode collectors.

In the solid-state battery manufactured by a method that includes the above-described steps, the number of opportunities in which the negative electrode layers are applied with pressure (at times of pressing or transferring) is less than the number of opportunities in which the positive electrode layers are applied with pressure.

Accordingly, in a method that includes the above-described steps, it is possible to control the pressure that is applied to the negative electrode layers to a desired extent, while applying a sufficient degree of pressure to the positive electrode layers in order to increase the density thereof. Therefore, the solid-state battery that includes a positive-electrode-centered layered structure tends to exhibit a favorable balance of battery characteristics.

The negative electrode layers of the solid-state battery that is manufactured by a method including the above-described steps are formed on the solid electrolyte layers that are formed on the positive electrode layers in step 2. Therefore, the solid electrolyte layers, on which the negative electrode layers are formed in step 3, are in a state in which the negative electrode active material particles in the negative electrode layers are less likely to penetrate therein due to the application of pressure.

In this regard, in the solid-state battery of the present disclosure, at least some of the negative electrode active material particles in the negative electrode layers penetrate into the solid electrolyte layers. Therefore, even if the solid state battery is manufactured by a method including the above-described steps (i.e., even if the solid-state battery includes a positive-electrode-centered layered structure), the joined state of the negative electrode layer and the solid electrolyte layer are maintained in a favorable manner.

In the following, components that constitute the solid-state battery of the present disclosure are described. In the following description, there are cases in which the negative electrode collector and the positive electrode collector are called "collectors" without discriminating therebetween, there are cases in which the negative electrode layer and the positive electrode layer are called "electrodes" without discriminating therebetween, and there are cases in which the negative electrode active material and the positive electrode active material are called "electrode active materials" without discriminating therebetween.

### (Collector)

The types of the collector included in the solid-state battery of the present disclosure are not particularly limited, and the collector may be selected from known collectors.

Specific examples of the materials of the collector include metals selected from Ag, Cu, Au, Al, Ni, Fe and Ti, and alloys including these metals.

In an embodiment of the present disclosure, the positive electrode collector may contain Al, and the negative electrode collector may contain Cu.

The thickness of the collector is not particularly limited, and can be selected in consideration of the type, the scale and the like of the battery that is obtained by using the collector.

The thickness of the collector may be, for example, 5 µm or more, 10 µm or more, or 20 µm or more.

The thickness of the collector may be, for example, 120 µm or less, 80 µm or less, or 60 µm or less.

### (Electrode Layer)

The electrode layer included in the solid-state battery of the present disclosure contains at least an electrode active material, and, as needed, may contain a binder, a conductive material, a solid electrolyte and the like.

Specific examples of negative electrode active materials include carbon materials, active materials containing the element Si, metallic lithium, lithium-containing alloys, metals or alloys that can form a alloy with lithium, oxides, and transition metal nitrides.

Examples of carbon materials include graphite materials, amorphous carbon materials, carbon black, and activated carbon. Examples of graphite materials include natural graphite and artificial graphite. Examples of amorphous carbon materials include hard carbon, soft carbon, coke, mesocarbon microbeads (MCMB) and mesophase pitch carbon fibers (MCF). The graphite materials may be covered by a metal or amorphous carbon.

Examples of active materials containing the element Si include elemental silicon, silicon alloys (e.g., alloys of Si and one or more metals selected from the group consisting of Sn, Ti, Fe, Ni, Cu, Co and Al), porous silicon, silicon clathrate compounds, and silicon oxides.

Specific examples of positive electrode active materials include composite oxides containing lithium and a transition metal (hereinafter also called composite oxides).

Examples of composite oxides include composite oxides having a layered-type crystal structure, composite oxides having a spinel-type crystal structure, and composite oxides having an olivine-type crystal structure.

Specific examples of composite oxides having a layered-type crystal structure include compounds expressed by LiMO₂ (where M is at least one type of transition metal selected from the group consisting of Ni, Co and Mn), and compounds formed by adding a different type of element to such compounds. Representative examples of composite oxides having a layered-type crystal structure include LCO (lithium cobalt oxide), NCM (lithium nickel cobalt manganese oxide) and NCA (lithium nickel oxide or lithium nickel cobalt aluminum oxide).

Specific examples of composite oxides having a spinel-type crystal structure include LiMn₂O₄.

Specific examples of composite oxides having an olivine-type crystal structure include LiMPO₄ (M is Fe, Co, Ni or Mn).

The electrode active material included in the electrode layer may be a single type only, or may be a combination of two or more types.

The form of the electrode active material may be, for example, fiber-shaped, spherical, flake-shaped or the like.

The volume average particle diameter of the electrode active material may be selected from the range of from 5 µm to 50 µm, for example.

The volume average particle diameter of the electrode active material is the value (D50) at which the accumulation from the small diameter side is 50% in a volume-based particle size distribution obtained by a laser diffraction/scattering method.

Specific examples of the binder include polyvinylidene fluoride (PVdF), polyethylene, polypropylene, polyethylene terephthalate, cellulose, nitrocellulose, carboxy methylcellulose, polyethylene oxide, polyepichlorohydrin, polyacrylonitrile, styrenebutadiene rubber (SBR), acrylonitrile-butadiene rubber (NBR), polyacrylate, polymethacrylate, and polytetrafluoroethylene (PTFE).

The binder included in the electrode layer may be a single type only, or may be a combination of two or more types.

Examples of the conductive material include carbon materials, metals, electrically-conductive oxides, and electrically-conductive nitrides.

Specific examples of carbon materials include graphite, carbon black (such as acetylene black, thermal black and furnace black), carbon nanotubes (CNT), carbon nanofibers (CNF), and vapor grown carbon fibers (VGCF^{™}).

The conductive material included in the electrode layer may be a single type only, or may be a combination of two or more types.

Examples of the solid electrolyte included in the electrode layer include sulfide solid electrolytes, oxide solid electrolytes and polymer solid electrolytes.

From the standpoint of the battery performances, sulfide solid electrolytes and polymer solid electrolytes are preferable as the solid electrolyte, and from the standpoint of thermal stability, sulfide solid electrolytes are more preferable.

The solid electrolyte included in the electrode layer may be a single type only, or may be a combination of two or more types.

Examples of sulfide solid electrolytes include compounds containing a metal element that serves as the ions for conduction, and sulfur (S).

Examples of the metal element include Li, Na, K, Mg and Ca. Thereamong, Li is preferable as the metal element.

The sulfide solid electrolyte may contain Li and S, and at least one selected from the group consisting of P, Si, Ge, Al and B. Thereamong, a sulfide solid electrolyte that contains Li, S and P (hereinafter also called LPS-type sulfide solid electrolyte) is preferable.

From the standpoint of ion conductivity, the sulfide solid electrolyte may contain a halogen element such as Cl, Br, I. From the standpoint of chemical stability, the sulfide solid electrolyte may contain oxygen (O).

Specific examples of LPS-type sulfide solid electrolytes include Li₂S-P₂S₅, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, LiI-Li₂S-P₂O₅, LiI-Li₃PO₄-P₂S₅, LiBr-LiI-Li₂S-P₂S₅, Li₂S-P₂S₅-ZₘSₙ (m and n in the formula are respectively positive numbers, and Z is Ge, Zn or Ga), Li₂S-GeS₂, Li₂S-SiS₂-Li₃PO₄, and Li₂S-SiS₂-LiₓMO_{y} (x and y in the formula are respectively positive numbers, and M is P, Si, Ge, B, Al, Ga or In).

In the above description, the notation "Li₂S-P₂S₅" means a sulfide solid electrolyte obtained by using Li₂S and P₂S₅ as the raw materials. The same holds for the other notations.

Among LPS-type sulfide solid electrolytes, sulfide solid electrolytes obtained by using Li₂S and P₂S₅ are preferable, and sulfide solid electrolytes satisfying the following formula are more preferable.

Li_{3+x+5y}P_{1-y}S₄ (0<x≤0.6, 0<y≤0.2)

Examples of oxide solid electrolytes include compounds having a NASICON (Na₃Zr₂PSi₂O₁₂) type crystal structure. Compounds having a NASICON-type crystal structure are high in ion conductivity, and exhibit excellent stability in the atmosphere.

Examples of compounds having NASICON-type crystal structures include phosphates that contain lithium. Examples of phosphates include composite lithium phosphate salts with Ti (e.g., Li₁₊ₓAlₓTi₂₋ₓ(PO₄)₃), and compounds in which all of or some of the Ti in the aforementioned composite lithium phosphate salt is substituted with a tetravalent transition metal such as Ge, Sn, Hf, Zr or a trivalent transition metal such as Al, Ga, In, Y, La.

Specific examples of compounds having a NASICON-type crystal structure include Li-Al-Ge-P-O based materials (Li₁₊ₓAlₓGe₂₋ₓ(PO₄)₃), Li-Al-Zr-P-O based materials (Li₁₊ₓAlₓZr₂₋ₓ(PO₄)₃), and Li-Al-Ti-P-O based materials (Li₁₊ₓAlₓTi₂₋ₓ(PO₄)₃).

Examples of polymer solid electrolytes include mixtures (complexes) of a polymer compound and an electrolyte salt. Specific examples of polymer compounds include polyether-based polymer compounds such as polyethylene oxide (PEO) and polypropylene oxide (PPO), polyamine-based polymer compounds such as polyethyleneimine (PEI), and polysulfide-based polymer compounds such as polyalkylene sulfide (PAS). Thereamong, polyether-based polymer compounds are preferable.

### (Solid Electrolyte Layer)

The solid electrolyte layer included in the solid-state battery of the present disclosure contains a solid electrolyte.

The type of the solid electrolyte contained in the solid electrolyte layer is not particularly limited, and may be selected from the above-described solid electrolytes that may be included in the electrode layer.

In a case in which the electrode layer contains a solid electrolyte, the solid electrolyte contained in the electrode layer and the electrolyte contained in the solid electrolyte layer may be the same or may be different.

The solid electrolyte contained in the solid electrolyte layer may be a single type only, or may be a combination of two or more types.

The solid electrolyte contained in the solid electrolyte layer may be a composite solid electrolyte that includes an inorganic solid electrolyte and a polymer solid electrolyte.

The solid electrolyte layer may contain an electrolyte that is a liquid (an electrolyte liquid) together with the solid electrolyte. For example, the solid electrolyte layer may contain an electrolyte liquid in an amount of less than 10 mass% with respect to the total amount of the electrolyte.

If the solid-state battery of the present disclosure contains an electrolyte liquid as an electrolyte, the type of the electrolyte liquid is not particularly limited, and a known electrolyte liquid can be used.

Specific examples of the electrolyte liquid include liquids in which a lithium salt such as LiPF₆ or LiFSi is dissolved in an organic solvent.

Specific examples of the organic solvent include cyclic or chain carbonates such as ethylene carbonate (EC), dimethyl carbonate (DMC), diethyl carbonate (DEC), and ethyl methyl carbonate (EMC). The solvent may be a mixture of two or more types of solvents, and may be a mixture including a cyclic carbonate and a chain carbonate.

The solvent may contain additives such as vinylene carbonate (VC).

### (Exterior Body)

The solid-state battery of the present disclosure may further have an exterior body. The exterior body accommodates an electrode stack that includes at least a collector, an electrode layer and a solid electrolyte layer. Examples of the exterior body include a laminate-type exterior body and a case-type exterior body. A laminate-type exterior body may be formed from a laminated body (a laminate film) that has a metal layer containing a metal such as aluminum and a heat-sealing layer containing a resin that melts by being heated.

### (Restraining Member)

The battery of the present disclosure may further have a restraining member. The restraining member applies restraining pressure to the electrode stack in the thickness direction thereof.

The restraining pressure that is applied in the thickness direction of the electrode stack may be, for example, 0.1 MPa or more, 1 MPa or more, or 5 MPa or more.

The restraining pressure that is applied in the thickness direction of the electrode stack may be, for example, 100 MPa or less, 50 MPa or less, or 20 MPa or less.

### (Applications of Solid-State Battery)

Applications of the solid-state battery of the present disclosure are not particularly limited. Examples of representative applications include use as the power source of a vehicle, an electronic device or a power storage system. Thereamong, the battery of the present disclosure is preferably used as the power source of a vehicle, and is preferably used as the power source for driving of a hybrid electric vehicle, a plug-in hybrid electric vehicle, or an electric vehicle.

Examples of vehicles include electric four-wheel vehicles, electric two-wheel vehicles, gasoline-powered vehicles and diesel-powered vehicles. Examples of electric four-wheel vehicles include electric vehicles (BEVs), plug-in hybrid electric vehicles (PHEVs), and hybrid electric vehicles (HEVs). Examples of electric two-wheel vehicles include electric motorcycles and electric assist bicycles.

### <Method of Manufacturing Solid-State Battery>

An embodiment of the present disclosure is a method of manufacturing the solid-state battery of the present disclosure, the method including:
forming, on a solid electrolyte layer, a negative electrode layer containing a solid electrolyte and a negative electrode active material that is in a state of complexes containing plural particles,
wherein the forming of the negative electrode layer includes application of pressure to the negative electrode layer such that at least some of the particles contained in the complexes separate from the complexes.

According to the method of the present disclosure, a solid-state battery in which the joined state of a negative electrode layer and a solid electrolyte layer is maintained in a favorable manner can be manufactured.

In the method of the present disclosure, the magnitude of the pressure applied to the negative electrode layer is not particularly limited, provided that it is a magnitude at which at least some of particles contained in the complexes separate from the complexes. In the method of the present disclosure, the particles that have separated from the complexes due to the pressure applied to the negative electrode layer are not covered by the solid electrolyte. Therefore, according to the method of the present disclosure, a state in which the particles that have separated from the complexes have penetrated into the solid electrolyte layer can be readily obtained.

In the method of the present disclosure, the method of applying pressure to the negative electrode layer may be a process for transferring the negative electrode layer onto the solid electrolyte layer, or may be a process that is carried out on the negative electrode layer that has been formed on the solid electrolyte layer.

The solid-state battery that is manufactured by the method of the present disclosure may be a solid-state battery that includes a positive-electrode-centered layered structure. Namely, the method of the present disclosure may include, in that order,
forming positive electrode layers on both sides of a positive electrode collector,
forming solid electrolyte layers on the positive electrode layers, and
forming negative electrode layers on the solid electrolyte layers.

According to the above-described method, it is possible to manufacture a solid-state battery that includes a positive-electrode-centered layered structure, and has a joined state of a negative electrode layer and a solid electrolyte layer that can be maintained in a favorable manner.

In the above-described method, the methods of carrying out the formation of the positive electrode layers, the formation of the solid electrolyte layers, and the formation of the negative electrode layers are not particularly limited, and can be selected from a coating method, a transferring method and the like.

The methods of carrying out the above-described respective steps are not particularly limited, and can be selected from a coating method, a transferring method and the like.

## Claims

1. A solid-state battery, comprising a negative electrode layer and a solid electrolyte layer that is adjacent to the negative electrode layer,
the negative electrode layer containing a negative electrode active material and a solid electrolyte, and
the negative electrode active material containing complexes that include plural particles, and particles that are not included in the complexes, wherein at least some of the particles that are not included in the complexes penetrate into the solid electrolyte layer.

2. The solid-state battery according to claim 1, wherein the negative electrode active material contains element Si.

3. The solid-state battery according to claim 1 or claim 2, comprising a structure in which a positive electrode layer, a solid electrolyte layer, a negative electrode layer and a negative electrode collector are disposed in that order at both sides of a positive electrode collector, respectively.

4. A method of manufacturing the solid-state battery according to any one of claim 1 to claim 3, the method comprising forming, on a solid electrolyte layer, a negative electrode layer containing a solid electrolyte and a negative electrode active material that is in a state of complexes containing plural particles,
wherein the forming of the negative electrode layer includes application of pressure to the negative electrode layer such that at least some of the particles contained in the complexes separate from the complexes.

5. The method according to claim 4, comprising:
forming positive electrode layers on both sides of a positive electrode collector;
forming solid electrolyte layers on the positive electrode layers; and
forming negative electrode layers on the solid electrolyte layers.
